(19) **Europäisches Patentamt / European Patent Office / Office européen des brevets**

(11) **EP 2 694 301 B1**

(12) **FASCICULE DE BREVET EUROPEEN**

(45) Date de publication et mention de la délivrance du brevet:
**04.03.2015 Bulletin 2015/10**

(21) Numéro de dépôt: **12713683.6**

(22) Date de dépôt: **30.03.2012**

(51) Int Cl.:
*B60C 1/00* *(2006.01)*   *B60C 11/12* *(2006.01)*

(86) Numéro de dépôt international:
**PCT/EP2012/055905**

(87) Numéro de publication internationale:
**WO 2012/131081 (04.10.2012 Gazette 2012/40)**

(54) **BANDE DE ROULEMENT AMELIOREE POUR PNEU DE VEHICULE POIDS LOURD**

VERBESSERTE LAUFFLÄCHE FÜR LKW-REIFEN

IMPROVED TREAD FOR HEAVY GOODS VEHICLE TYRE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **01.04.2011 FR 1152829**

(43) Date de publication de la demande:
**12.02.2014 Bulletin 2014/07**

(73) Titulaires:
• **Compagnie Générale des Etablissements Michelin**
 **63000 Clermont-Ferrand (FR)**
• **MICHELIN Recherche et Technique S.A.**
 **1763 Granges-Paccot (CH)**

(72) Inventeurs:
• **HIDROT, Jean-Denis**
 **F-63040 Clermont-Ferrand Cedex 9 (FR)**
• **CAMBON, Stéphanie**
 **F-63040 Clermont-Ferrand Cedex 9 (FR)**
• **AUDIGIER, Richard**
 **F-63040 Clermont-Ferrand Cedex 9 (FR)**

(74) Mandataire: **Diernaz, Christian**
 **M. F. P. Michelin,**
 **23, place des Carmes Dechaux,**
 **DGD/PI-F35-Ladoux**
 **63040 Clermont-Ferrand Cedex 09 (FR)**

(56) Documents cités:
WO-A1-2010/000443    FR-A- 1 375 849
FR-A1- 2 940 185     US-A1- 2005 209 413

**Description**

*DOMAINE DE L'INVENTION*

La présente invention concerne les bandes de roulement pour pneus équipant les véhicules poids lourd et plus particulièrement la sculpture de ces bandes de roulement et les compositions de caoutchouc les composant.

*ÉTAT DE LA TECHNIQUE*

Un roulage par temps de pluie requiert une élimination la plus rapide possible de l'eau dans la région de contact de chaque pneu avec la chaussée afin d'assurer un contact entre le matériau constituant la bande de roulement et cette chaussée. Pour ce faire, il est formé sur la bande de roulement des rainures qui, par leurs dimensions (profondeur et largeur), restent ouvertes dans le contact avec la chaussée et permettent ainsi d'écouler de l'eau qui n'est pas repoussée sur l'avant et sur les côtés du pneu.

Les rainures peuvent avoir toute forme vue en section transversale et en trace sur la surface de roulement et être orientées selon une direction quelconque. Par trace d'une rainure sur la surface de roulement, on entend ici la ligne moyenne géométrique suivie par les arêtes formées par ladite rainure sur ladite surface.

Pour les pneus destinés aux essieux directeur ou porteur d'un véhicule poids lourd, il est usuel de pourvoir la bande de roulement de ces pneus avec des rainures longitudinales dont la profondeur est égale sensiblement à l'épaisseur totale de la bande de roulement (sans compter l'épaisseur éventuellement prévue pour permettre un renouvellement partiel des rainures). Cette profondeur est en règle générale comprise entre 13 et 18 mm sur ces essieux. Pour les pneus destinés aux essieux moteurs la profondeur des rainures peut aller jusqu'à 24 mm.

Pour de tels pneus de l'état de la technique, le taux de creux volumique total est en règle générale compris entre 15 et 25% du volume de la bande de roulement destiné à être usé au cours du roulage. On constate que ces pneus ont un volume de creux disponible dans l'aire de contact qui est relativement important à l'état neuf ; ce volume de creux s'ouvrant sur la surface de roulement dans le contact est en moyenne de l'ordre de 100 cm$^3$ pour par exemple un pneu de dimension 315/70 R 22.5. Pour le pneu considéré, cette valeur est obtenue pour ses conditions nominales de gonflage et d'écrasement en statique telles que définies par le standard ETRTO.

Par ailleurs pour améliorer l'adhérence du pneu sur la chaussée, il est connu de former des incisions qui génèrent des arêtes sur la surface de roulement. Une incision est une fente mince ayant une largeur moyenne faible et telle que, sous des conditions usuelles de sollicitation, les parois de matière délimitant cette incision puissent venir, au moins partiellement, en contact l'une sur l'autre lors du passage dans la région de contact avec la route afin de limiter la perte de rigidité. Ces incisions peuvent être de profondeur égale à l'épaisseur de la bande à user ou inférieure à cette épaisseur.

Si des rainures ou plus généralement des cavités sont indispensables au drainage de l'eau, la diminution de surface de matière qui en résulte peut affecter sensiblement la performance en usure d'une bande et en conséquence réduire la durée d'utilisation du pneu résultant d'une augmentation de la vitesse d'usure. D'autres performances du pneu peuvent aussi être affectées et notamment les performances en comportement, en bruit en roulage, en résistance au roulement. Il est également observé que ces rainures formées pour avoir une profondeur utile égale à la hauteur de bande à user peuvent être la cause de problèmes d'endurance. Dans certaines conditions de roulage, des objets étrangers comme des cailloux peuvent être capturés dans ces rainures et venir agresser le fond de ces rainures et générer l'apparition de cassures dans le caoutchouc.

Par ailleurs, les rainures génèrent un abaissement des rigidités de compression et de cisaillement puisque ces rainures délimitent des portions de matière plus sensibles à la déformation comparativement aux portions délimitées par des incisions. En effet, dans le cas d'incisions les parois de matière délimitant ces incisions peuvent venir en contact les unes sur les autres au moins dans le passage dans la région de contact avec la chaussée. Cette diminution de rigidité, dans le cas de la présence de rainures, induit une augmentation des déformations et génère une diminution de la performance en usure de la bande : on observe une usure plus importante pour une distance parcourue fixée (ceci correspond à une augmentation de la vitesse d'usure de la bande). Par ailleurs on constate une augmentation de la résistance au roulement et donc de la consommation des véhicules équipés de tels pneus, résultant d'une augmentation des pertes hystérétiques liées aux cycles de déformations de la matière composant la bande de roulement.

Le choix d'un matériau composant la bande de roulement se fait généralement en fonction de l'usage du pneumatique ; de façon classique, l'utilisation de caoutchouc naturel permet à la fois d'obtenir un niveau d'hystérèse bas (donc une thermique du pneumatique abaissée) et une très bonne tenue aux agressions et arrachements. C'est pourquoi on utilise de façon usuelle des matériaux à base de caoutchouc naturel pour former les bandes de roulement de pneu pour poids lourd. L'utilisation d'élastomères diéniques non isopréniques tels que les copolymères de SBR de Tg supérieur à la Tg du caoutchouc naturel permettent d'améliorer l'adhérence sur sol mouillé. Ceci se fait cependant au détriment de l'hystérèse et donc de la résistance au roulement ; c'est pourquoi il est préférable d'utiliser des SBR fonctionnalisés qui permettent de maintenir des niveaux d'hystérèse compatibles avec l'utilisation en bande de roulement de pneumatique poids-lourds. Cependant, l'utilisation de ce type d'élastomère, même s'il s'accompagne par une nette amélioration de l'adhérence sur sol mouillé conduit à une diminution de la résistance aux arrachements sur choc et notamment aux chocs sur les parties latérales des bandes de roulement lors de roulage contre des obstacles.

Le document FR-A-2940185 décrit une bande de roulement ayant les caractéristiques techniques du préambule de la revendication 1.

Définitions :

Par sculpture d'une bande de roulement, on entend dans la présente description la géométrie de la partie de la bande de roulement destinée à venir en contact avec une chaussée, cette sculpture étant formée par des éléments de reliefs délimités les uns des autres par des découpures (rainures, incisions, puits, cavités).

Le volume total d'une bande de roulement est égal au volume total de matière pouvant être usé en roulage avant de devoir retirer le pneu pour, soit renouveler sa bande de roulement par rechapage, soit le remplacer par un nouveau pneu.

Le volume total de creux (ou de cavité) d'une bande de roulement est égal à la somme de tous les volumes de creux s'ouvrant ou non sur la surface de roulement de la bande à l'état neuf. Par creux on entend des rainures, des puits ou tout type de cavités, lesdites cavités étant destinées à s'ouvrir dans la zone de contact avec la chaussée et à participer à un moment ou a un autre au drainage de la zone de contact.

Un bloc est un élément en relief formé sur la bande de roulement qui est délimité par des creux ou rainures et comprenant des parois latérales et une face de contact destinée à venir en contact avec la chaussée pendant le roulage.

Le plan médian équatorial est un plan perpendiculaire à l'axe de rotation du pneu et passant par les points du pneu radialement les plus éloignés dudit axe de rotation. Ce plan équatorial divise sensiblement le pneu en deux moitiés sensiblement égales.

Par direction radiale, on entend une direction qui est perpendiculaire à l'axe de rotation du pneu (cette direction correspond à la direction de l'épaisseur de la bande de roulement).

Par direction axiale, on entend une direction parallèle à l'axe de rotation du pneu.

Par direction circonférentielle, on entend une direction qui est perpendiculaire à la fois à la direction axiale et à une direction radiale.

Les conditions usuelles de roulage du pneu ou conditions d'utilisation sont celles qui sont définies par la norme E.T.R.T.O. ; ces conditions d'utilisation précisent la pression de gonflage de référence correspondant à la capacité de charge du pneu indiquée par son indice de charge et son code vitesse. Ces conditions d'utilisation peuvent aussi être dites "conditions nominales" ou "conditions d'usage".

Dans la présente description, sauf indication expresse différente, tous les pourcentages (%) indiqués sont des pourcentages (%) en poids.

« pce » signifie parties en poids pour cent parties d'élastomère (s).

Tout intervalle de valeurs désigné par l'expression : "entre A et B" représente l'ensemble des valeurs supérieures à A et inférieure à B (les valeurs A et B sont exclues de cet ensemble), tandis que tout intervalle de valeurs désigné par l'expression "de A à B" représente l'ensemble de toutes les valeurs au moins égales à A et au plus égale à B (les valeurs A et B sont incluses dans cet ensemble).

De façon usuelle, on utilise indifféremment dans le présent texte les termes « élastomère » et « caoutchouc » qui sont interchangeables.

*BREF EXPOSE DE L'INVENTION*

La présente invention vise à proposer une bande de roulement de pneu destiné à équiper un véhicule poids lourd qui par une combinaison judicieuse d'un matériau présentant des performances améliorées en adhérence sur sol mouillé et d'un type spécifique de sculpture permet réaliser un bon compromis de performances notamment une bonne résistance aux chocs.

À cet effet, l'invention a pour objet une bande de roulement pour pneu pour véhicule poids lourd d'épaisseur totale E et de volume total V, cette bande de roulement ayant une surface de roulement destinée à venir en contact avec une chaussée et ayant en outre :

- au moins deux couches d'usure I, II dans l'épaisseur de la bande de roulement, chaque couche ayant une épaisseur au plus égale à 75% de l'épaisseur totale E de la bande de roulement,

- un volume total de creux Vc au moins égal à 7% et au plus égal à 12% d'un volume égal à la somme du volume total V de matière composant la bande de roulement et du volume total de creux,

- au moins une rainure continue comprenant une pluralité de cavités externes s'ouvrant sur la surface de roulement à l'état neuf et une pluralité de cavités internes placées radialement et en totalité à l'intérieur de la surface de roulement à l'état neuf, la première couche d'usure s'étendant dans l'épaisseur de la bande de roulement jusqu'aux points radialement les plus à l'intérieur des cavités externes, chaque autre couche d'usure s'étendant dans la profondeur de la bande jusqu'aux points les plus à l'intérieur des cavités internes de la couche d'usure considérée, les cavités externes ayant une profondeur moyenne P1 au plus égale à 75 % de l'épaisseur totale E de la bande de roulement, une longueur moyenne L1 et une section transversale d'aire S1, les cavités internes ayant une hauteur moyenne P2 au plus égale à 75 % de l'épaisseur de la bande de roulement, une longueur moyenne L2 et une section transversale d'aire S2, chaque cavité interne étant reliées à une cavité externe par un canal de liaison ayant deux extrémités, lesdites extrémités ayant des sections transversales d'aires égales aux aires S1, S2 des sections transversales des cavités interne et externe reliées par ce canal de liaison,

- cette bande de roulement ayant en outre un volume de creux efficace Ve pour chaque couche d'usure, ce volume de creux efficace Ve contribuant à drainer la région de contact de la bande de roulement avec une chaussée, qui est inférieur au volume total de creux Vc de la bande, ce volume de creux efficace satisfaisant la relation suivante :

$$0.4 \text{ St} < \text{Ve} < 0.8 \text{ St},$$

dans laquelle, 0.4 et 0.8 sont des hauteurs exprimées en millimètres et St est la surface délimitée par le contour externe de l'empreinte de contact de la bande de roulement mesurée en statique dans les conditions de charge et de pression nominales, le pneu étant monté sur sa jante recommandée.

Cette bande de roulement est en outre telle qu'au moins la première couche d'usure I est constituée d'une composition de caoutchouc à base d'au moins un matériau ayant une Tg dynamique - mesurée selon la norme ASTM D 5992-96, supérieure à -40°C et contenant de façon majoritaire un copolymère SBR de Tg > -65°C.

Préférentiellement, la composition de caoutchouc à base majoritaire SBR est choisie pour avoir un allongement de rupture à 60° C qui est inférieur à 500%. Encore plus préférentiellement, cet allongement est inférieur à 400%.

Cet allongement de rupture est préférentiellement mesuré sur un échantillon de matière prélevée sur le pneu vulcanisé. Selon cette méthode (dite « méthode 2 ») on forme une éprouvette à partir de chaque échantillon prélevé pour avoir une longueur de 18 mm, une largeur de 1.1 mm et une épaisseur de 0.3 mm. L'éprouvette issue du pneumatique est prélevée de manière à ce que sa longueur soit perpendiculaire à la direction circonférentielle du pneumatique. Cette éprouvette est ensuite étirée sur un extensomètre à une vitesse de 50 mm/mn à une température de 60° C jusqu'à rupture. On enregistre la déformation de rupture en suivant le déplacement de la traverse et la contrainte à la rupture sur au moins deux éprouvettes.

Une autre méthode (dite «méthode 1 ») consiste à mesurer cet allongement de rupture dans les conditions telles que définies par la norme française NF T 40-101(décembre 1979). Selon cette méthode, l'allongement de rupture est obtenu dans un test de rupture par une traction uniaxiale. La mesure est réalisée en étirant jusqu'à rupture et à une vitesse de 500 mm/mn une éprouvette « H2 » de 2.5 mm d'épaisseur. La déformation est suivie à l'aide d'un extensomètre optique "Zwick" (marque déposée), la mesure est réalisée à 60°C.

Grâce à cette combinaison de sculpture de bande de roulement de pneu et d'un matériau tel que choisi, il est possible d'obtenir des performances améliorées en adhérence sur sol mouillé. En effet et malgré la réduction de performance du matériau choisi en propriété de rupture comparativement aux matériaux utilisés dans l'état de la technique - de tels matériaux usuels ayant une base majoritaire de caoutchouc naturel, il est possible, grâce à la combinaison de cette sculpture et de ce matériau spécifique, d'obtenir à la fois de bonnes performances en usure et en roulage tout en ayant une performance satisfaisante en résistance aux chocs et notamment en résistance à la rupture en fond des rainures.

Pour mémoire, les compositions usuelles sont à base d'une majorité de caoutchouc naturel prise en coupage avec des copolymères de SBR de Tg comprises entre -108°C (BR) et -48°C (SBR). Ce coupage fait que la Tg dynamique du matériau est située entre -55°C et -45°C. La solution utilisée dans la présente invention contient une majorité de SBR de Tg supérieure à -65°C (cette valeur correspondant à la Tg du caoutchouc naturel).

Par volume de creux efficace Ve pour chaque couche d'usure, on entend ici un volume de creux formé dans la bande de roulement pour servir à drainer la région de contact de la bande de roulement, ce volume de creux efficace étant déterminé lorsque le pneu est soumis à des conditions usuelles d'usage.

Par couche d'usure, on entend, dans la présente demande, une partie de la bande de roulement liée à la profondeur maximale des rainures dans ladite couche d'usure. Une couche d'usure a une épaisseur qui est inférieure à l'épaisseur totale de la bande de roulement et qui est égale à la profondeur maximale des rainures ou cavités présentes dans cette couche d'usure. Les bandes de roulement de l'invention comprennent au moins deux couches d'usure dont certaines des rainures ou cavités ne sont formées que dans une desdites couches. Il est bien sûr possible et même avantageux que dans cette configuration, chaque couche d'usure devienne active avant qu'une précédente couche d'usure soit totalement usée ; dans un tel cas on a un recouvrement entre au moins deux couches d'usure. Une couche d'usure devient active dès lors que les cavités ou rainures formées dans cette couche s'ouvrent sur la surface de roulement du pneu en contact avec la chaussée pour drainer l'eau présente sur ladite chaussée par temps de pluie. La première couche d'usure correspond à la partie de la bande de roulement radialement le plus à l'extérieur à l'état neuf.

Les hauteurs de 0.4 mm et 0.8 mm correspondent à des hauteurs moyennes d'eau qui peuvent être présentes sur une chaussée par temps de pluie et qu'il faut pouvoir drainer ou capter pour maintenir un bon contact entre la bande de roulement et la chaussée. Ces hauteurs moyennes multipliées par la surface Se - surface déterminée par le contour de l'empreinte de contact de la bande de roulement sur la même chaussée et exprimée en $mm^2$ (les surfaces correspondant aux cavités s'ouvrant sur la surface de roulement de la bande sont ici prises en compte) - sont à même de fournir une indication du volume de cavité efficace Ve lorsque le pneu est soumis à ses conditions nominales d'usage (pression interne de gonflage et charge portée. Si ce volume Ve est inférieur à 0.4 fois Se, il n'est pas suffisant pour obtenir un drainage satisfaisant, et il reste alors de l'eau à l'interface entre le pneu et la chaussée. Si ce volume Ve est supérieur à 0.8 fois Se alors ce volume est jugé surabondant d'un point de vue de l'obtention d'une rigidité appropriée de la bande.

De manière préférentielle, la bande de roulement selon l'invention est telle que toutes ses couches d'usure sont constituées d'une même composition de caoutchouc.

Selon une variante préférentielle, les cavités externes et internes des rainures continues sont telles que la différence entre les longueurs moyennes des cavités internes et des cavités externes est au plus égale à 20% de la longueur moyenne la plus grande (c'est-à-dire $0,80 \leq L1/L2 \leq 1,20$), la différence des aires moyennes des sections transversales des cavités internes et externes est au plus égale à 20% de l'aire moyenne la plus grande (c'est-à-dire $0,80 \leq S1/S2 \leq 1,20$), et chaque cavité externe est reliée à au moins deux cavités internes de la même rainure par des canaux de liaison assurant la continuité entre lesdites cavités internes et externes. Ces canaux de liaison ont pour fonction de permettre la circulation de l'eau entre les cavités externes captant l'eau et les cavités internes.

Selon une autre variante préférentielle, cette bande de roulement comprend en outre une pluralité d'incisions s'ouvrant sur la surface de roulement de la bande à l'état neuf, chacune desdites incisions reliant deux cavités externes consécutives d'une même rainure et au moins deux canaux de liaison et au moins une cavité interne. Ces incisions sont présentes pour faciliter le moulage et le démoulage de la bande.

Selon une variante préférentielle de la présente invention, chaque rainure continue comprenant une pluralité de cavités externes débouchant sur la surface de roulement à l'état neuf et une pluralité de cavités internes placées radialement et en totalité à l'intérieur de la surface de roulement à l'état neuf, le volume total des cavités internes est au moins égal à 30% et au plus égal à 60% du volume total de ladite rainure à l'état neuf.

Pour assurer une pérennité des performances à l'usage, il est judicieux de former dans chaque couche d'usure les volumes de creux nécessaires, soit par la formation de cavités soit par la formation de rainures. Les rainures se distinguant des cavités en ce qu'elles s'ouvrent vers l'extérieur de l'empreinte de contact du pneu afin de permettre l'évacuation de l'eau présente sur la chaussée par temps de pluie. Il est ainsi avantageux de former une sorte de réseau de rainures permettant d'assurer, quel que soit le niveau d'usure de la bande selon l'invention, un écoulement hors de l'empreinte de contact, ce réseau étant formé de manière à limiter la réduction de rigidité liée à la formation de parties en creux dans la bande.

Avantageusement la composition de caoutchouc d'au moins la première couche d'usure comprend de la silice comme charge renforçante.

Encore plus avantageusement, le copolymère de SBR de la composition de caoutchouc est fonctionnalisé vis-à-vis de la silice.

Selon une autre variante intéressante de bande de roulement selon l'invention, toutes les couches d'usure de cette bande ont la même composition.

L'invention s'étend à toute bande de roulement fabriquée en vue de renouveler la partie externe d'un pneu après usure par rechapage ou encore à tout type de pneu destiné à équiper un véhicule poids lourd et pourvu avec une bande de roulement telle que décrite précédemment.

D'autres caractéristiques et avantages de l'invention ressortent de la description faite ci-après en référence aux dessins annexés qui montrent, à titre d'exemple non limitatif, une forme de réalisation de l'objet de l'invention.

*BREVE DESCRIPTION DES FIGURES*

La figure 1 représente une vue en plan d'une bande de roulement selon l'art antérieur ;

La figure 2 montre une vue en coupe locale de la bande de roulement de la figure 1 selon une ligne II-II ;

La figure 3 montre une vue en plan d'une bande de roulement selon l'invention ;

La figure 4 montre une vue en coupe de la bande de roulement de la figure 3 selon une ligne IV-IV ;

La figure 5 montre une vue partielle de la bande de roulement montrée avec la figure 3.

*DESCRIPTION DES FIGURES*

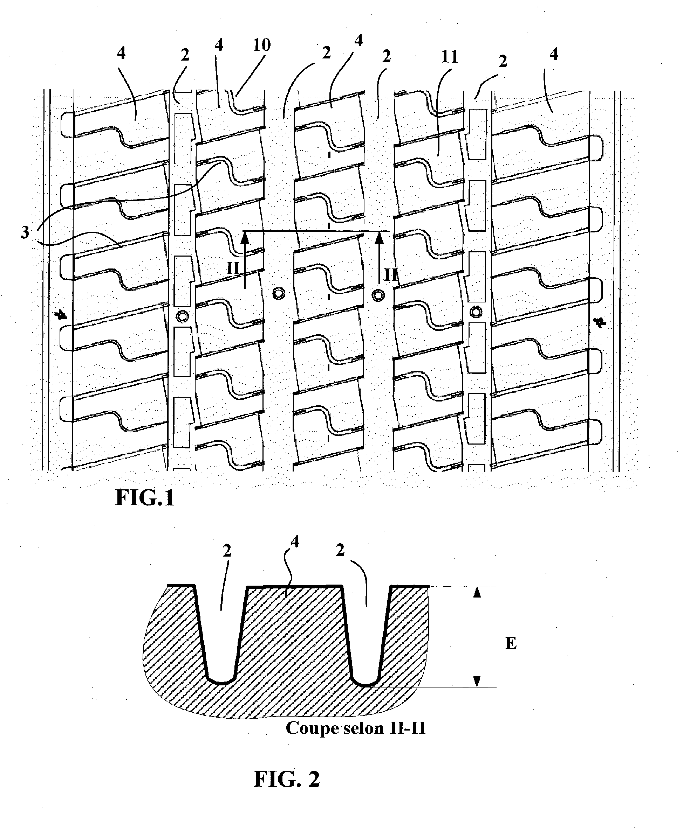

La figure 1 montre une vue en plan d'une bande de roulement 10 selon l'art antérieur correspondant à la sculpture XZE2 telle que commercialisée pour la dimension 315/70 R 22.5.

Le dessin de sculpture de cette bande de roulement 10 est notée S0 ; dans ce qui suit, cette sculpture S0 est prise comme sculpture référence.

Pour le pneu considéré, cette sculpture de référence S0 comprend quatre rainures 2 longitudinales dont la profondeur, égale à 15 mm, correspond à l'épaisseur totale E de la bande de roulement destinée à être usée en roulage. Cette même sculpture de référence S0 comprend en outre des rainures transversales 3 de faible largeur et faible profondeur (au plus égale à 2 mm). Les rainures longitudinales délimitent des nervures 4.

À l'état initial correspondant à la bande de roulement à l'état neuf non usé, cette sculpture de référence S0 a un volume total de creux mesuré dans les conditions nominale de pression de gonflage et de charge, disponible à dans le contact avec une chaussée, qui est important et égal dans le cas présent à 100 cm$^3$. Ce volume est mesuré dans les conditions statiques suivantes : charge égale à 3250 kg et pression de gonflage égale à 9 bars.

La figure 2 montre une vue en coupe de la bande de roulement de la figure 1 suivant une ligne II-II. Sur cette figure 2, on voit que les rainures longitudinales 2 délimitent des nervures 4 ayant une hauteur égale à la profondeur des rainures longitudinale, cette dernière se confondant avec l'épaisseur E de bande de roulement à user.

Dans le cas présent, il n'y a qu'une seule couche d'usure puisque le volume total de creux formé par les rainures longitudinales est ouvert en totalité sur la surface de roulement à l'état initial (pneu neuf) et ce volume de creux diminue à mesure que s'use la bande de roulement.

Cette sculpture de référence S0 a un volume de creux total égal à 19% du volume total de la bande prévu pour être usé.

Toutes les rainures ont des profondeurs égales à l'épaisseur de la bande de roulement.

Cette sculpture de référence S0 a un volume de creux efficace Ve qui est supérieur au volume obtenu en multipliant une hauteur égale à 1 mm par la surface St (en mm$^2$) correspondant à la surface délimitée par le contour externe de l'empreinte de contact de la bande de roulement mesurée en statique dans les conditions nominales de charge et de pression.

Pour cette sculpture de référence S0, le volume de creux efficace Ve pour drainer l'eau dans le contact avec une chaussée dans la couche d'usure unique est égal à 100% du volume de creux total Vt de la bande de roulement, puisque tous les creux s'ouvrent sur la surface de roulement du pneu neuf.

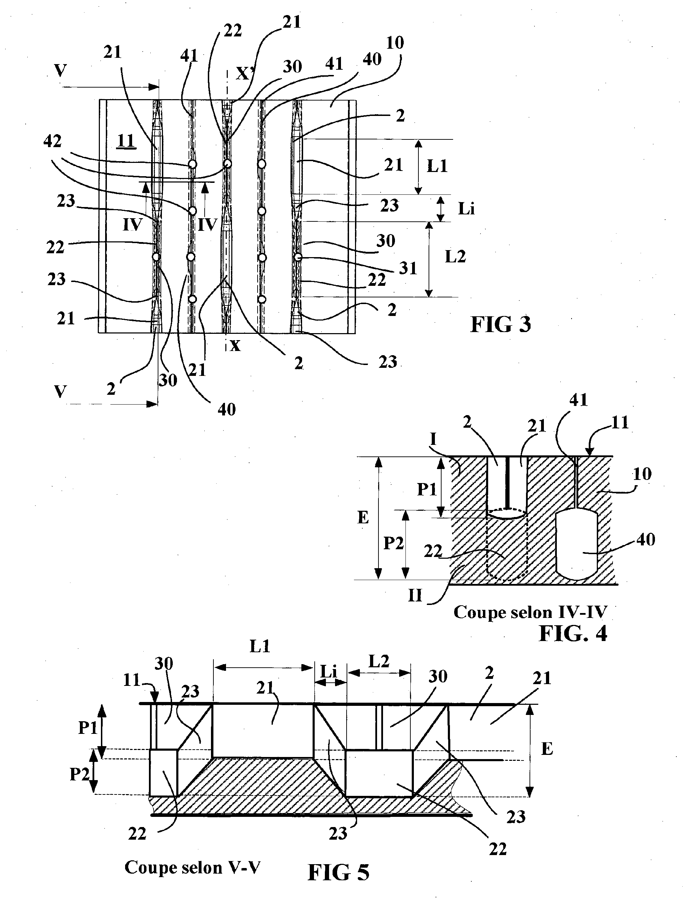

La figure 3 montre une vue en plan d'une sculpture S1 d'une bande de roulement qui, en combinaison avec une composition comprenant un élastomère synthétique diénique non isoprénique à un taux supérieur ou égal à 40 pce et à titre de charge renforçante majoritaire en poids, au moins un noir de carbone, est dans la portée de la présente invention.

Cette bande de roulement est destinée à un pneu de dimension 315/70 R 22.5 lui-même destiné à équiper l'essieu directeur d'un véhicule poids lourd.

Sur cette figure 3, on montre une partie d'une bande de roulement 10 à l'état neuf, cette bande 10 ayant une surface de roulement 11 destinée à venir en contact avec la chaussée pendant le roulage. Cette bande 10 comprend trois rainures 2 continues à l'état neuf dans la direction circonférentielle. Chaque rainure 2 est formée d'une succession d'une pluralité de cavités externes 21 de forme allongée de longueur L1 et débouchant sur la surface de roulement 11 à l'état neuf, et d'une pluralité de cavités internes 22 de longueur L2 situées entièrement à l'intérieur de la bande de roulement à l'état neuf. Des canaux de liaison 23 sont formés pour relier entre elles les cavités internes 22 et les cavités externes 21 et assurer ainsi la continuité de la rainure 2 dans la direction principale de cette rainure. Ces canaux de liaison 23 ont, mesurée dans la direction principale de la rainure (ici dans la direction circonférentielle), une longueur Li non nulle qui est ici inférieure aux longueurs L1 et L2. Tout se passe comme si la rainure 2 suivait un tracé ondulé dans la direction radiale, cette rainure comportant une succession de parties (cavités externes) s'ouvrant sur la surface de roulement à l'état neuf et en alternance des parties (cavités internes) en totalité à l'intérieur de la bande de roulement à l'état neuf, les cavités de liaison assurant une continuité entre les volumes desdites cavités internes et externes (c'est-à-dire la possibilité de faire circuler un fluide de l'extérieur vers l'intérieur et réciproquement). Ainsi, au passage dans le contact avec la chaussée, de l'eau présente sur cette chaussée peut être drainée par les cavités externes vers les cavités internes. Il est bien sûr nécessaire qu'il y ait toujours au moins une cavité externe ouverte en totalité ou en partie dans l'empreinte de contact avec la chaussée. Les dimensions des cavités externes ainsi que celles des cavités internes sont déterminées de façon à respecter cette condition pour une longueur donnée de contact avec une chaussée.

La profondeur des cavités externes 21 détermine sensiblement l'épaisseur de la première couche d'usure I, visible sur la figure 4 décrite plus loin.

Pour permettre le démoulage de ces rainures, des incisions 30 prolongent radialement vers l'extérieur les cavités internes 22. Ces incisions 30 sont pourvues de puits 31 orientés radialement vers l'extérieur, lesdits puits s'ouvrant à la fois sur la surface de roulement à l'état neuf et dans les cavités internes 22.

Intercalés entre ces rainures longitudinales 2, la bande de roulement 10 est pourvue de canaux 40 orientés longitudinalement et entièrement formés à l'intérieur de la bande 10. Ces canaux 40 sont destinés à apparaître en surface (c'est-à-dire à déboucher sur la surface de roulement) après une usure correspondant sensiblement à l'usure de la première couche d'usure I (préférentiellement un peu avant l'usure complète de la première couche). Ces canaux 40 sont prolongés vers la surface de roulement par une incision 41 reliant une pluralité de puits 42, ces puits débouchant à la fois sur la surface de roulement 11 et dans le canal 40. Ces puits participent avec les cavités externes 21 au drainage de la région de contact au cours du roulage.

La figure 4 montre une coupe de la bande de roulement dans un plan de coupe repéré par la ligne IV-IV sur la figure 3.

Sur cette figure 4 on voit en coupe la bande 10 ayant une épaisseur E la section transversale d'une rainure 2 montrant une cavité externe 21 ayant une aire S1 et s'étendant dans la bande sur une profondeur P1 égale à 7 mm soit environ 64% de l'épaisseur E totale de la bande (égale ici à 11 mm). Cette cavité externe 21 est prolongée radialement vers l'extérieur par une incision 30 et est reliée à des cavités internes 22 d'aire S2 qui déterminent par leur hauteur P2 une deuxième couche d'usure II. Cette deuxième couche d'usure II est destinée à apparaître un peu avant que la première couche d'usure I ait été usée en totalité. On voit aussi sur cette figure 4 un canal 40 tout entier situé dans la deuxième couche d'usure, lui-même prolongé radialement vers l'extérieur par l'incision 41. Ce canal a une aire de section transversale sensiblement égale à l'aire S2 de la cavité interne 22.

Avec chaque rainure 2, tout se passe comme si chaque couche d'usure a des cavités différentes sur la surface de roulement. Une première couche d'usure fait apparaître les cavités externes 21 sur la surface de roulement et une deuxième couche II fait apparaître les cavités internes 22 et des canaux 40 sur une nouvelle surface de roulement. La couche d'usure I se termine dans l'épaisseur de la bande au fond des cavités externes et cette couche d'usure n'est pas encore totalement usée qu'apparaît déjà la couche d'usure II (dès apparition sur la surface de roulement des cavités internes 22). Ainsi, la bande de roulement comprend à tout moment un volume de creux approprié pour obtenir un drainage de l'eau éventuellement présente sur la chaussée.

Avant de voir apparaître les cavités internes 22, les canaux de liaison 23 continuent de jouer leur rôle et notamment d'assurer la continuité entre les volumes de creux formés par les cavités externes et les cavités internes de la rainure 2.

La figure 5 montre une coupe un plan de coupe longitudinal repéré V-V sur la figure 3. Dans le cas présent, la longueur L1 de chaque cavité externe 21 est égale à 150 mm et la longueur L2 de chaque cavité interne 22 est égale à 110 mm ; la longueur Li des canaux de liaison 23 est égale à 15 mm. Sur cette figure 5, on voit que chaque cavité interne 22 est prolongée vers la surface de roulement 11 de la bande par une incision 30. Ainsi, le moulage de la bande de roulement s'en trouve facilité. Bien entendu, on pourrait prévoir que les cavités externes 21 soient prolongées dans l'épaisseur de la bande radialement vers l'intérieur pour permettre un démoulage radialement par l'intérieur et ensuite de rapporter ladite bande sur un pneu en cours de fabrication.

Chaque cavité interne 22 a des dimensions proches de celles des cavités externes 21 ; les longueurs respectives L1 et L2 des cavités externes et internes sont ici assez voisines. Afin que la bande présente toujours des éléments de rainure ou de creux sur sa surface de roulement quel que soit l'état d'usure de la bande, il est avantageux, comme c'est le cas ici, que les cavités internes 22 d'une même rainure 2 apparaissent avant que les cavités externes 21 aient disparu en totalité. On forme ainsi une première couche d'usure I s'étendant entre la surface de roulement de la bande à l'état neuf et les points les plus à l'intérieur des cavités externes 21 ; une deuxième couche II s'étend ensuite jusqu'aux points les plus à l'intérieur de la bande des cavités internes 22. Bien entendu, il est possible de prévoir que les deuxièmes cavités n'apparaissent qu'après que les premières aient totalement disparu par usure. Il est également possible de prévoir un nombre de couches d'usure plus grand que deux (exemple décrit avec le support des figures 3, 4, 5).

Grâce à ces dispositions, il est possible d'avoir à l'état neuf une rigidité d'ensemble de la bande qui est plus importante que pour la même bande pourvue de rainures usuelles qui auraient chacune une profondeur totale égale à la distance entre les points les plus à l'intérieur des cavités internes et la surface de roulement à l'état neuf. Au moins dans la première phase d'usage de la bande (c'est-à-dire jusqu'à une usure égale à 75% de la profondeur des cavités externes), la fonction de drainage et de captage de l'eau est réalisée par cette rainure puisque l'eau récupérée dans les cavités externes peut s'écouler dans les canaux de liaison et les cavités internes. L'eau ainsi drainée peut alors ressortir par une autre cavité externe. De manière avantageuse les raccordements entre les différentes cavités sont appropriés pour ne pas gêner l'écoulement de fluide à l'intérieur de la rainure.

Lorsque la première couche d'usure I est totalement usée, les cavités internes 22 s'ouvrent sur toute leur longueur sur la nouvelle surface de roulement et peuvent alors servir de réservoirs pour emmagasiner une plus ou moins grande partie de l'eau présente sur la chaussée par temps de pluie.

D'un point de vue dimensionnel, la sculpture S1 que l'on vient de décrire est définie de la façon suivante :

- La sculpture S1 comprend deux couches d'usure ayant pour chacune une hauteur de rainure de 7 mm, et un chevauchement de 3 mm entre les 2 couches (chevauchement signifiant qu'avant la disparition de la rainure ou des cavités d'une couche d'usure, il apparaît une nouvelle rainure ou cavité de la couche d'usure suivante) ;

- Cette sculpture S1 présente un volume total de creux Vc égal à 9% d'un volume égal à la somme du volume total V de matière de la bande de roulement et du volume total de creux ;

- Toutes les cavités externes de la sculpture S1 s'ouvrant sur la surface de roulement à l'état initial ont une profondeur égale à 64% de l'épaisseur de la bande de roulement ;

- Chaque couche d'usure de cette sculpture S1 a un volume total de creux efficace Ve égal à 40 cm$^3$. Ce volume Ve, exprimé en mm$^3$, satisfait la relation 0.4 St < Ve < 0.8 St, la surface St étant exprimée en mm$^2$. Dans le cas présent, on mesure une surface St délimitée par le contour externe de l'empreinte de contact de la bande de roulement mesurée en statique dans les conditions de charge et de pression nominales, le pneu étant monté sur sa jante recommandée égale à 60300 mm$^2$ (on a ici, 24120 < 40000 < 48240).

Pour chaque rainure continue (2) comprenant une pluralité de cavités externes (21) débouchant sur la surface de roulement à l'état neuf et une pluralité de cavités internes (22) placées radialement et en totalité à l'intérieur de la surface de roulement (11) à l'état neuf, le volume total des cavités internes est égal à 45% du volume total de ladite rainure à l'état neuf. Ce volume total est égal à la somme des volumes des cavités internes, des cavités externes et des cavités de liaison.

En combinaison avec les bandes de roulement présentées précédemment, on a testé diverses compositions notées A0, A1, qui sont décrites ci-après. La composition A0 est la composition usuelle pour la bande de roulement de référence telle que commercialisée.

La bande de roulement notée A0/S0 (composition de caoutchouterie A0 associée à la sculpture A0) est la combinaison de référence qui sert de point de comparaison avec les autres combinaisons.

Par extension, la bande de roulement notée An/Sm correspond à une composition de caoutchouterie An (avec n= 0, 1) associée à la sculpture Sm (avec m = 0 ou 1).

De façon résumée, les compositions A0, A1, sont décrites ci-après et dans le tableau 1 :
- A0 contient 40 pce de BR standard et 54 pce de N234 (CTAB=120 m$^2$/g).
- A1 contient 75 pce de SBR standard de température de transition vitreuse Tg égale à - 48°C et 56.5 pce de N134 (CTAB=135 m$^2$/g).

**Tableau 1**

| Composition | A0 | A1 |
|---|---|---|
| NR (1) | 60 | 15 |
| BR (2) | 40 | 10 |
| SBR (3) | | 75 |
| Noir de carbone N234 | 54 | |
| Noir de carbone N134 | | 56.5 |
| Paraffine | 1 | 1 |
| Antioxydant (5) | 2 | 2 |
| Acide stéarique | 1.5 | 2 |
| ZnO | 3 | 3 |
| Soufre | 1.1 | 1.1 |

(suite)

| Composition | A0 | A1 |
|---|---|---|
| Accélérateur (6) | 1.1 | 1.1 |

| (1) NR : caoutchouc naturel (plastifié, peptisé) (Tg=-65°C) <br> (2) BR: polybutadiène avec 2.5% de 1,4-trans ; 92.5% de 1,4-cis ; 5.0% de 1-2 (Tg=-105°C) <br> (3) SBR couplé étain à indice de polydispersité élevé : copolymère styrène butadiène avec les taux massiques suivants : 50% de BR 1,4-trans ; 26% de BR 1,4-cis ; 24% de BR 1,2 ; 26,5% de styrène (Tg =-48°C). La masse moléculaire Mn de ce polymère, déterminée par la technique SEC, est de 145 000 g.mol-1, l'Ip est de 1,7. <br> (5) N-1,3 diméthylbutyl N-phénylparaphénylènediamine (6-PPD) <br> (6) N-cyclohexyl-2-bensothiazylsulfénamide (CBS) |
|---|

La composition de caoutchouterie A0 contient, en outre, 3 pce d'un agent de mise en oeuvre nécessaire de par son coupage d'élastomères et 0.5 pce de durcisseur et 0.25 pce de résine durcissante.

Les compositions de caoutchouterie A0, A1 sont caractérisées par leur résistance à la rupture, mesurée par une traction uniaxiale (méthode 1); la mesure est réalisée en étirant jusqu'à rupture à 500 mm/mn une éprouvette H2 de caoutchouc de 2.5 mm d'épaisseur ; l'extensomètre utilisé est de marque "Zwick" (marque déposée). La déformation est suivie à l'aide d'un extensomètre optique, la mesure est réalisée à 60°C, selon la norme française NF T 40-101 (décembre 1979). Le matériau caoutchouc utilisé pour fabriquer l'éprouvette est non vulcanisé et prélevé avant mise en forme pour fabrication d'une bande de roulement. Ce matériau est calandré et mis en plaque de 2.5 mm d'épaisseur puis découper pour obtenir une éprouvette dont la plus grande longueur correspond à la direction de calandrage.

Une autre méthode pour caractériser les propriétés de rupture consiste à prélever des éprouvettes dans le pneumatique lui-même. Eprouvette de longueur 18 mm, de largeur 1.1 mm et de section 0.3 mm. L'éprouvette issue du pneumatique est prélevée de manière à ce que la longueur de l'éprouvette soit parallèle à la direction transversale du pneumatique (direction parallèle à l'axe de rotation du pneu). Cette éprouvette est ensuite étirée sur un extensomètre "Instron" (marque déposée) à 50 mm/mn à 60°C jusqu'à rupture. On obtient la déformation et la contrainte à la rupture sur au moins deux éprouvettes.

La mesure de la Tg dynamique est réalisée sur un viscoanalyseur de marque déposée "Metravib" (modèle VA4000), selon la norme ASTM D 5992-96. On enregistre la réponse d'un échantillon de composition vulcanisée (éprouvette cylindrique de 4 mm de hauteur et de 400 mm$^2$ de section), soumis à une sollicitation sinusoïdale en cisaillement simple alterné, à la fréquence de 10Hz, sous une contrainte de 0.7 Mpa, pendant un balayage en température entre -60° C à +60° C. le positionnement de la Tg dynamique est défini par le positionnement du maximum de tan$\delta$ (ratio des modules visqueux et élastiques = G"/G').

Les valeurs de ces caractéristiques sont données dans le tableau 2.

**Tableau 2**

| Composition | A0 | A1 |
|---|---|---|
| Tg dynamique 10 Hz | -50°C | -30° C |
| | | |
| Propriétés à la rupture issue de la méthode 1 | | |
| Elongation rupture à 60° C (en %) | 566 | 470 |
| Contrainte rupture à 60° C (en MPa) | 20 | 19.4 |
| | | |
| Propriété à la rupture issue de la méthode 2 | | |
| Elongation rupture à 60°C (en %) | 510 | 469 |
| Contrainte rupture à 60°C (en MPa) | 22.8 | 19.2 |

On constate que la combinaison d'une sculpture telle que décrite avec un matériau dont les performances en usure sont très sensiblement améliorées par rapport au matériau de référence, permet d'augmenter les performances du pneu pourvu avec cette bande de roulement bien que le matériau de bande de roulement ait un allongement à la rupture inférieur à 500% d'allongement et puisse être sensible aux agressions par chocs. Dans la présente combinaison, la sculpture elle même permet de désensibiliser le pneu aux chocs.

**Tests et mesure comparatifs en pneu**.

**Test de freinage :** on mesure la distance parcourue avec un véhicule porteur pour passer d'une vitesse de 80 km/h à une vitesse de 20 km/h lors d'un roulage sur un sol béton bitumineux arrosé d'eau.

Pour une combinaison sculpture / composition considérée, une valeur supérieure à la valeur exprimée en base 100 pour la combinaison de référence A0/S0, indique une réduction de la distance de freinage et donc une amélioration de la performance en adhérence sur sol mouillé pour la combinaison considérée.

**Test de résistance aux chocs :** un test d'endurance de bande de roulement a été réalisé avec ces mêmes combinaisons (sculpture/composition) montées sur l'essieu avant d'un poids lourd de type tracteur. On évalue la résistance de la bande de roulement des pneus par un examen visuel de leurs bandes de roulement. On relève notamment le nombre d'arrachements de matière et la taille de ces arrachements. Une note égale à 0 correspond à une performance non satisfaisante, tandis qu'une note égale à 100 correspond à une performance satisfaisante.

Les résultats de ces différents tests sont présentés dans le tableau 3.

**Tableau 3**

| Composition | A0 | A0 | A1 | A1 |
|---|---|---|---|---|
| Sculpture | S0 | S1 | S0 | S1 |
| Combinaison composition/sculpture | A0/S0 | A0/S1 | A1/S0 | A1/S1 |
| Tests et mesure pneu | | | | |
| | | | | |
| Test freinage sol mouillé | 100 | 98 | 110 | 106 |
| Test endurance (résistance aux chocs) | 100 | 100 | 0 | 100 |

On observe que la combinaison de la sculpture S1 avec un matériau A1 plus sensible à la rupture que le matériau A0 permet de bénéficier du gain d'adhérence mouillé (utilisation d'un fort taux de SBR de Tg supérieure à celle du caoutchouc naturel) sans dégradation de la tenue à l'arrachement, malgré un allongement à la rupture nettement dégradé.

Bien entendu, l'invention n'est pas limitée aux exemples décrits et représentés et diverses modifications peuvent y être apportées sans sortir du cadre défini par les revendications. En particulier si toute la présente description s'est attachée à décrire l'application à un pneu destiné à équiper un véhicule poids lourd, il doit être compris qu'une bande de roulement comprenant une sculpture et une composition telles que définies ici fait également partie de l'invention puisqu'une telle bande de roulement est destinée à être intégrée à un pneu (soit pendant la fabrication soit lors du rechapage dudit pneu).

On peut noter que, de manière générale, des sculptures de bande de roulement dont une partie seulement du volume de cavité s'ouvre sur la surface de roulement et plus précisément dans le contact avec une chaussée sont avantageusement mises en oeuvre avec les compositions décrites dans ce document pour les pneus selon l'invention. On peut citer notamment les sculptures décrites dans les publications WO 2010/030276 ou encore WO 02/38399. Ces sculptures, tout en offrant un drainage satisfaisant de la région de contact avec une chaussée, permettent de maintenir une rigidité globale élevée comparativement aux sculptures usuelles tout en rendant également possible une réduction de l'épaisseur de la bande de roulement.

On peut aussi noter que la sculpture S1 qui est utilisée en combinaison avec les compositions ressortant de l'invention peut comprendre des rainures et creux orientés selon des directions différentes de la direction longitudinale (circonférentielle sur le pneu). Ainsi selon la destination sur un véhicule poids lourd, la sculpture comprend à la fois des rainures longitudinales - et des rainures transversales, ces dernières pouvant être d'un type identique à celles décrites avec le support des figures 3, 4, 5.

**Revendications**

1. Bande de roulement pour pneu pour véhicule poids lourd ayant une surface de roulement destinée à venir en contact avec une chaussée, cette bande de roulement ayant une épaisseur totale E et un volume total V, cette bande de roulement ayant :

   - au moins deux couches d'usure I, II dans l'épaisseur de la bande de roulement, chaque couche ayant une épaisseur au plus égale à 75% de l'épaisseur totale E de la bande de roulement,
- un volume total de creux Vc au moins égal à 7% et au plus égal à 12% d'un volume égal à la somme du volume total V de la bande de roulement et du volume total de creux,
- au moins une rainure continue (2) comprenant une pluralité de cavités externes (21) s'ouvrant sur la surface de roulement à l'état neuf et une pluralité de cavités internes (22) placées radialement et en totalité à l'intérieur de la surface de roulement (11) à l'état neuf, la première couche d'usure s'étendant dans l'épaisseur de la bande de roulement jusqu'aux points radialement les plus à l'intérieur des cavités externes (21), chaque autre couche d'usure s'étendant dans la profondeur de la bande jusqu'aux points les plus à l'intérieur des cavités internes (22) de la couche d'usure considérée, les cavités externes (21) ayant une profondeur moyenne P1 au plus égale à 75 % de l'épaisseur totale E de la bande de roulement, une longueur moyenne L1 et une section transversale d'aire S1, les cavités internes (22) ayant une hauteur moyenne P2 au plus égale à 75 % de l'épaisseur de la bande de roulement, une longueur moyenne L2 et une section transversale d'aire S2,
- cette bande de roulement ayant en outre un volume de creux efficace Ve pour chaque couche d'usure, ce volume de creux efficace Ve contribuant à drainer la région de contact de la bande de roulement avec une chaussée, qui est inférieur au volume total de creux Vc de la bande, ce volume de creux efficace satisfaisant la relation suivante :

$$0.4 \text{ St} < \text{Ve} < 0.8 \text{ St},$$

dans laquelle, 0.4 et 0.8 sont des hauteurs exprimées en millimètres et St est la surface délimitée par le contour externe de l'empreinte de contact de la bande de roulement mesurée en statique dans les conditions de charge et de pression nominales, le pneu étant monté sur sa jante recommandée,
cette bande de roulement étant **caractérisée en ce que** chaque cavité interne est reliée à une cavité externe par un canal de liaison ayant deux extrémités, lesdites extrémités ayant des sections transversales d'aires égales aux aires S1, S2 des sections transversales des cavités interne et externe reliées par ce canal de liaison, et et **en ce qu'**au moins la première couche d'usure I est constituée d'une composition de caoutchouc à base d'au moins un matériau ayant une Tg dynamique - mesurée selon la norme ASTM D 5992-96, supérieure à -40°C et contenant de façon majoritaire un copolymère SBR de Tg > -65°C.

2. Bande de roulement selon la revendication 1 **caractérisée en ce que** la composition de caoutchouc de la première couche d'usure I a un allongement de rupture à 60° C inférieur à 500%, cet allongement étant mesuré sur le matériau prélevé sur la bande de roulement.

3. Bande de roulement selon la revendication 2 **caractérisée en ce que** la composition de caoutchouc de la première couche d'usure I a un allongement de rupture à 60°C est inférieur à 400%, cet allongement de rupture étant mesuré sur le matériau prélevé sur la bande de roulement dans une direction parallèle à la direction transversale de la bande.

4. Bande de roulement selon la revendication 1 **caractérisée en ce que** toutes les couches d'usure I, II sont constituées d'une composition de caoutchouc à base d'au moins un matériau ayant une Tg dynamique - mesurée selon la norme ASTM D 5992-96, supérieure à -40°C et contenant de façon majoritaire un copolymère **SBR** de Tg > -65°C.

5. Bande de roulement selon la revendication 4 **caractérisée en ce que** toutes les couches d'usure I, II sont constituées d'une composition de caoutchouc ayant un allongement de rupture à 60° C inférieur à 500%, cet allongement de rupture étant mesuré sur le matériau prélevé sur la bande de roulement dans une direction parallèle à la direction transversale de la bande.

6. Bande de roulement selon l'une quelconque des revendications 1 à 5 **caractérisée en ce que** la composition de caoutchouc comprend de la silice comme charge renforçante.

7. Bande de roulement selon la revendication 6 **caractérisée en ce que** le copolymère de SBR de la composition de caoutchouc est fonctionnalisé vis-à-vis de la silice.

8. Bande de roulement selon la revendication 7 **caractérisée en ce que** ces cavités externes (21) et internes (22) sont telles que la différence entre les longueurs moyennes des cavités internes et des cavités externes est au plus égale à 20% de la longueur moyenne la plus grande (c'est-à-dire 0,80 ≤ L1/L2 ≤ 1,20), la différence des aires moyennes des sections transversales des cavités internes et externes est au plus égale à 20% de l'aire moyenne la plus grande (c'est-à-dire 0,80 ≤ S1/S2 ≤ 1,20), et chaque cavité externe (21) d'une rainure continue (2) est reliée à au moins deux cavités internes (22) de la même rainure par des canaux de liaison (23) assurant la continuité entre lesdites cavités internes et externes.

9. Bande de roulement selon la revendication 8 **caractérisée en ce que** cette bande comprend en outre une pluralité d'incisions (30) s'ouvrant sur la surface de roulement de la bande à l'état neuf, chacune desdites incisions reliant deux cavités externes consécutives d'une même rainure et au moins deux canaux de liaison et au moins une cavité interne.

10. Bande de roulement selon l'une quelconque des revendications 8 à 9 **caractérisée en ce que** pour chaque rainure continue (2) comprenant une pluralité de cavités externes (21) débouchant sur la surface de roulement à l'état neuf et une pluralité de cavités internes (22) placées radialement et en totalité à l'intérieur de la surface de roulement (11) à l'état neuf, le volume total des cavités internes est au moins égal à 30% et au plus égal à 60% du volume total de ladite rainure à l'état neuf.

11. Pneu pour véhicule poids lourd comprenant une bande de roulement selon l'une quelconque des revendications 8 à 10.

## Patentansprüche

1. Laufstreifen für einen Reifen eines Schwerlastwagens mit einer Lauffläche, die dazu bestimmt ist, mit einer Straße in Kontakt zu kommen, wobei dieser Laufstreifen eine Gesamtdicke E und ein Gesamtvolumen V hat, wobei dieser Laufstreifen hat:

- mindestens zwei Verschleißschichten I, II in der Dicke des Laufstreifens, wobei jede Schicht eine Dicke höchstens gleich 75% der Gesamtdicke E des Laufstreifens hat,
- ein Gesamtvertiefungsvolumen Vc mindestens gleich 7% und höchstens gleich 12% eines Volumens gleich der Summe des Gesamtvolumens V des Laufstreifens und des Gesamtvertiefungsvolumens,
- mindestens eine durchgehende Rille (2), die eine Vielzahl von äußeren Hohlräumen (21), die sich im Neuzustand auf die Lauffläche öffnen, und eine Vielzahl von inneren Hohlräume (22) enthält, die radial und insgesamt im Inneren der Lauffläche (11) im Neuzustand angeordnet sind, wobei die erste Verschleißschicht sich in der Dicke des Laufstreifens bis zu den radial am weitesten innen liegenden Punkten der äußeren Hohlräume (21) erstreckt, wobei jede andere Verschleißschicht sich in der Tiefe des Streifens bis zu den am weitesten innen liegenden Punkten der inneren Hohlräume (22) der betreffenden Verschleißschicht erstreckt, wobei die äußeren Hohlräume (21) eine mittlere Tiefe P1 höchstens gleich 75% der Gesamtdicke E des Laufstreifens, eine mittlere Länge L1 und einen Flächenquerschnitt S1 haben, wobei die inneren Hohlräume (22) eine mittlere Höhe P2 höchstens gleich 75% der Dicke des Laufstreifens, eine mittlere Länge L2 und einen Flächenquerschnitt S2 haben,
- wobei dieser Laufstreifen außerdem ein Vertiefungswirkvolumen Ve für jede Verschleißschicht hat, wobei dieses Vertiefungswirkvolumen Ve dazu beiträgt, den Kontaktbereich des Laufstreifens mit einer Straße zu entwässern, das geringer als das Gesamtvertiefungsvolumen Vc des Streifens ist, wobei dieses Vertiefungswirkvolumen die folgende Beziehung erfüllt:

$$0,4 \text{ St} < Ve < 0,8 \text{ St,}$$

wobei 0,4 und 0,8 in Millimeter ausgedrückte Höhen sind, und St die vom Außenumriss des Kontaktabdrucks des Laufstreifens begrenzte Fläche statisch gemessen unter den Last- und Druck-Nennbedingungen ist, wobei der Reifen auf seine empfohlene Felge montiert ist,

wobei dieser Laufstreifen **dadurch gekennzeichnet ist, dass** jeder innere Hohlraum mit einem äußeren Hohlraum durch einen zwei Enden aufweisenden Verbindungskanal verbunden ist, wobei die Enden Flächenquerschnitte gleich den Flächen S1, S2 der Querschnitte der inneren und äußeren Hohlräume haben, die von diesem Verbindungskanal verbunden werden, und dass mindestens die erste Verschleißschicht I aus einer Kautschukzusammensetzung auf der Basis mindestens eines Materials besteht, das eine dynamische Tg - gemessen gemäß der Norm ASTM D 5992-96 - höher als -40°C hat und mehrheitlich ein SBR-Copolymer mit einer Tg > -65°C enthält.

**2.** Laufstreifen nach Anspruch 1, **dadurch gekennzeichnet, dass** die Kautschukzusammensetzung der ersten Verschleißschicht I eine Bruchdehnung bei 60°C von weniger als 500% hat, wobei diese Dehnung am vom Laufstreifen entnommenen Material gemessen wird.

**3.** Laufstreifen nach Anspruch 2, **dadurch gekennzeichnet, dass** die Kautschukzusammensetzung der ersten Verschleißschicht I eine Bruchdehnung bei 60°C von weniger als 400% hat, wobei diese Bruchdehnung am vom Laufstreifen entnommenen Material in einer Richtung parallel zur Querrichtung des Streifens gemessen wird.

**4.** Laufstreifen nach Anspruch 1, **dadurch gekennzeichnet, dass** alle Verschleißschichten I, II aus einer Kautschukzusammensetzung auf der Basis mindestens eines Materials bestehen, das eine dynamische Tg - gemessen gemäß der Norm ASTM D 5992-96 - höher als -40°C hat und mehrheitlich ein SBR-Copolymer mit einer Tg > -65°C enthält.

**5.** Laufstreifen nach Anspruch 4, **dadurch gekennzeichnet, dass** alle Verschleißschichten I, II aus einer Kautschukzusammensetzung bestehen, die eine Bruchdehnung bei 60°C von weniger als 500% hat, wobei diese Bruchdehnung am vom Laufstreifen entnommenen Material in einer Richtung parallel zur Querrichtung des Streifens gemessen wird.

**6.** Laufstreifen nach einem der Ansprüche 1 bis 5, **dadurch gekennzeichnet, dass** die Kautschukzusammensetzung Kieselsäure als verstärkender Füllstoff enthält.

**7.** Laufstreifen nach Anspruch 6, **dadurch gekennzeichnet, dass** das SBR-Copolymer der Kautschukzusammensetzung gegenüber der Kieselsäure funktionalisiert ist.

**8.** Laufstreifen nach Anspruch 7, **dadurch gekennzeichnet, dass** diese äußeren (21) und inneren Hohlräume (22) so sind, dass der Unterschied zwischen den mittleren Längen der inneren Hohlräume und der äußeren Hohlräume höchstens gleich 20% der größten mittleren Länge (d.h. $0,80 \leq L1/L2 \leq 1,20$) ist, der Unterschied der mittleren Flächen der Querschnitte der inneren und äußeren Hohlräume höchstens gleich 20% der größten mittleren Fläche (d.h. $0,80 \leq S1/S2 \leq 1,20$) ist, und jeder äußere Hohlraum (21) einer durchgehenden Rille (2) mit mindestens zwei inneren Hohlräumen (22) der gleichen Rille durch Verbindungskanäle (23) verbunden ist, die die Kontinuität zwischen den inneren und äußeren Hohlräumen gewährleisten.

**9.** Laufstreifen nach Anspruch 8, **dadurch gekennzeichnet, dass** dieser Streifen außerdem eine Vielzahl von Einschnitten (30) enthält, die sich an der Lauffläche des Streifens im Neuzustand öffnen, wobei jeder der Einschnitte zwei aufeinanderfolgende äußere Hohlräume der gleichen Rille und mindestens zwei Verbindungskanäle und mindestens einen inneren Hohlraum verbindet.

**10.** Laufstreifen nach einem der Ansprüche 8 bis 9, **dadurch gekennzeichnet, dass** für jede durchgehende Rille (2), die eine Vielzahl von äußeren Hohlräumen (21), die im Neuzustand an der Lauffläche münden, und eine Vielzahl von inneren Hohlräume (22) enthält, die radial und vollständig im Inneren der Lauffläche (11) im Neuzustand angeordnet sind, das Gesamtvolumen der inneren Hohlräume mindestens gleich 30% und höchstens gleich 60% des Gesamtvolumens der Rille im Neuzustand ist.

**11.** Reifen für einen Schwerlastwagen, der einen Laufstreifen nach einem der Ansprüche 8 bis 10 enthält.

**Claims**

**1.** Tread for a tyre of a heavy goods vehicle having a tread surface intended to come into contact with a roadway, this tread having a total thickness E and a total volume V, this tread having:

- at least two wearing layers I, II in the thickness of the tread, each layer having a thickness at most equal to 75% of the total thickness E of the tread,
- a total voids volume Vc at least equal to 7% and at most equal to 12% of a volume equal to the sum of the total volume V of the tread and of the total voids volume,
- at least one continuous groove (2) comprising a plurality of external cavities (21) opening onto the tread surface in the new state and a plurality of internal cavities (22) positioned radially and entirely on the inside of the tread surface (11) in the new state, the first wearing layer extending into the thickness of the tread as far as the radially innermost points of the external cavities (21), each other wearing layer extending into the depth of the tread as far as the innermost points of the internal cavities (22) of the wearing layer in question, the external cavities (21) having a mean depth P1 at most equal to 75% of the total thickness E of the tread, a mean length L1 and a cross section of area S1, the internal cavities (22) having a mean height P2 at most equal to 75% of the thickness of the tread, a mean length L2 and a cross section of area S2,
- this tread furthermore having an effective voids volume Ve for each wearing layer, this effective voids volume Ve contributing to draining the contact patch in which the tread is in contact with a roadway, which is less than the total voids volume Vc of the tread, this effective voids volume satisfying the following equation:

$$0.4 \text{ St} < \text{Ve} < 0.8 \text{ St},$$

in which 0.4 and 0.8 are heights expressed in millimetres and St is the surface delimited by the external contour of the contact patch of the tread measured under static conditions under nominal load and pressure, the tyre being mounted on its recommended rim,
this tread being **characterized in that** each internal cavity is connected to an external cavity by a connecting channel having two ends, said ends having cross sections of areas equal to the areas S1, S2 of the cross sections of the internal and external cavities connected by this connecting channel and **in that** at least the first wearing layer I is made up of a rubber compound based on at least one material having a dynamic Tg - measured in accordance with standard ASTM D 5992-96, higher than -40°C and predominantly containing an SBR copolymer of Tg > -65°C.

2. Tread according to Claim 1, **characterized in that** the rubber compound of the first wearing layer I has an elongation at break at 60°C of less than 500%, this elongation being measured on the material sampled from the tread.

3. Tread according to Claim 2, **characterized in that** the rubber compound of the first wearing layer I has an elongation at break at 60°C of less than 400%, this elongation at break being measured on the material sampled from the tread in a direction parallel to the transverse direction of the tread.

4. Tread according to Claim 1, **characterized in that** all the wearing layers I, II are made up of a rubber compound based on at least one material having a dynamic Tg - measured in accordance with standard ASTM D 5992-96, higher than -40°C and predominantly containing an SBR copolymer of Tg > -65°C.

5. Tread according to Claim 4, **characterized in that** all the wearing layers I, II are made up of a rubber compound having an elongation at break at 60°C of less than 500%, this elongation at break being measured on the material sampled from the tread in a direction parallel to the transverse direction of the tread.

6. Tread according to any one of Claims 1 to 5, **characterized in that** the rubber compound contains silica by way of reinforcing filler.

7. Tread according to Claim 6, **characterized in that** the SBR copolymer of the rubber compound is functionalized with regard to the silica.

8. Tread according to Claim 7, **characterized in that** these external cavities (21) and internal cavities (22) are such that the difference between the mean lengths of the internal cavities and of the external cavities is at most equal to 20% of the longest mean length (namely $0.80 \le L1/L2 \le 1.20$), the difference in the mean cross-sectional areas of the internal and external cavities is at most equal to 20% of the largest mean area (namely $0.80 \le S1/S2 \le 1.20$), and each external cavity (21) of a continuous groove (2) is connected to at least two internal cavities (22) of the same groove by connecting channels (23) which provide the continuity between said internal and external cavities.

9. Tread according to Claim 8, **characterized in that** this tread further comprises a plurality of sipes (30) opening onto the tread surface in the new state, each of said sipes connecting two consecutive external cavities of one same groove and at least two connecting channels and at least one internal cavity.

10. Tread according to either one of Claims 8 and 9, **characterized in that**, for each continuous groove (2) comprising a plurality of external cavities (21) opening onto the tread surface in the new state and a plurality of internal cavities (22) positioned radially and entirely on the inside of the tread surface (11) in the new state, the total volume of the internal cavities is at least equal to 30% and at most equal to 60% of the total volume of said groove in the new state.

**11.** Tyre for a heavy goods vehicle comprising at tread according to any one of Claims 8 to 10.

**FIG.1**

Coupe selon II-II

**FIG. 2**

FIG 3

Coupe selon IV-IV

FIG. 4

Coupe selon V-V    FIG 5

**EP 2 694 301 B1**

RÉFÉRENCES CITÉES DANS LA DESCRIPTION

**Documents brevets cités dans la description**

- FR 2940185 A
- WO 2010030276 A
- WO 0238399 A